## Europäisches Patentamt
## European Patent Office
## Office européen des brevets

(11) Publication number: **0 294 176**
**A2**

# EUROPEAN PATENT APPLICATION

(21) Application number: **88304999.1**

(22) Date of filing: **01.06.88**

(51) Int. Cl.⁴: **C 03 C 27/06**
**B 32 B 18/00, C 04 B 38/00,**
**B 32 B 17/00**

(30) Priority: **02.06.87 US 57533    02.06.87 US 57531**

(43) Date of publication of application:
**07.12.88 Bulletin 88/49**

(84) Designated Contracting States:
**AT DE FR GB IT SE**

(71) Applicant: **Corning Glass Works**
**Sullivan Park FR-212**
**Corning New York 14831 (US)**

(72) Inventor: **Lipp, George Daniel**
**110 Keefe Boulevard**
**Painted Post New York 14870 (US)**

**Chyung, Kenneth**
**16 Timberlane**
**Painted Post New York 14870 (US)**

**Daws, Steven Bruce**
**218 Pine Street**
**Corning New York 14830 (US)**

**Gadkaree, Kishor Purushottam**
**273 Orchard Drive**
**Big Flats New York 14814 (US)**

**Morena, Robert Michael**
**438 Browntown Road**
**Caton New York (US)**

**Taylor, Mark Peter**
**25 Hillcrest Drive**
**Painted Post New York 14870 (US)**

(74) Representative: **Froud, Clive et al**
**Elkington and Fife High Holborn House 52/54 High Holborn**
**London WC1V 6SH (GB)**

(54) Lightweight laminated or composite structures and method of making same.

(57) Described are laminated structures consisting essentially of a light weight interior member prepared from a glass, glass-ceramic, or ceramic, an exterior member prepared from a glass, glass-ceramic, or ceramic, and a bonding member prepared from a glass, glass-ceramic, or ceramic. The light weight interior member may be composed of a porous body, a corrugated body, or a honeycomb body. In a preferred embodiment, at least one of said members is reinforced through the entrainment of ceramic fibers and/or whiskers. In the most preferred embodiment, each exterior and interior member is reinforced through the entrainment of ceramic fibers and/or whiskers and the bonding member is reinforced through the entrainment of ceramic whiskers.

Also described are bonded ceramic matrix composite structures such as ceramic panels or beams, and a method for making them, the structures comprising ceramic facing sheets to which are bonded one or an array of relatively thin-walled, hollow, high-stiffness channeled ceramic support elements (2), the support elements being of modular design with each support being formed by a continuous composite ceramic wall incorporating multidirectional fiber reinforcement and defining a central channel extending, in the bonded structure, in a direction generally parallel with the ceramic facing sheets (1).
Methods are shown for making these laminated and bonded composite structures.

FIG.1

EP 0 294 176 A2

## Description

## LIGHTWEIGHT LAMINATED OR COMPOSITE STRUCTURES AND METHOD OF MAKING THE SAME

A laminated or sandwich-type structure containing a light weight interior member composed, e.g., of a porous body, such as a foam, or a corrugated or honeycomb member, has been adjudged to comprise the most appropriate configuration where light weight is of prime concern, but where the structure must also satisfy the required design and use constraints for a particular application. Typically, the sandwich-type structure will consist of an interior or core member composed of a porous body or having a corrugated or honeycomb geometry bonded adjacent to at least one, or between two, exterior or face sheet members, the latter members commonly having flat surfaces. For example, organic or inorganic fiber reinforced epoxy or phenolic resins have been used as skin or face sheet members and rigid forms or foams prepared from such polymeric materials as polyurethane, polyvinyl chloride, epoxies, and phenolics have been employed as core elements. To illustrate, honeycomb and corrugated interior members have been fashioned from aluminum fiber and glass fiber reinforced plastics.

The use of organic materials as elements thereof self-evidently restricts the utility of such structures to relatively low temperature applications, commonly no higher than about 250°C. Therefore, the primary objective of the instant invention was to fabricate sandwich-type structures which would be light weight, exhibit high strength, high stiffness, and toughness, and be capable of use at high temperatures.

According to one aspect of the invention, the laminated structure may consist essentially of

a light weight interior member or core prepared from a glass, glass-ceramic, or ceramic, which member may be reinforced through the incorporation of glass, glass-ceramic, or ceramic fibers and/or whiskers; and

an exterior member, variously called a skin or face sheet, prepared from a glass, glass-ceramic, or ceramic, which member may be reinforced through the incorporation of glass, glass-ceramic, or ceramic fibers and/or whiskers; which are bonded together through

a glass frit which may be thermally crystallizable and which may be reinforced through the incorporation of glass, glass-ceramic, or ceramic whiskers.

The core member may comprise one layer or a plurality of layers of corrugated strips of material having juxtaposed support skin members bonded at the apices of the corrugations of each strip and disposed between adjacent strips to form a cellular structure; which cellular structure defines a plurality of hollow cavities extending through the core, each hollow cavity having an axis which may extend in a direction perpendicular to or parallel to the longitudinal axis of the laminated product.

In like manner, the core member may comprise one or a plurality of honeycombs having juxtaposed support skin members bonded thereto and disposed between adjacent units.

Also in like manner, the core member may comprise one or a plurality of porous bodies having juxtaposed support or skin members bonded thereto and disposed between adjacent units. Such porous bodies may consist, e.g., of a glass, a glass-ceramic, or a ceramic.

In most instances the exterior or skin member will have a planar configuration, hence, a "face sheet." It will be appreciated that such a configuration is a matter of convenience only and not mandatory.

According to another aspect of the invention, improved composite ceramic structures such as panels, beams or the like may be provided having further enhanced strength and stiffness, by combining one or more ceramic facing sheets with one or an array of relatively thin-walled, hollow, high-stiffness channeled ceramic support elements. One or more of the support elements are bonded to the facing sheet or between facing sheets, being positioned for bonding so that the channel axis of each support element (the axis substantially centered within the hollow channel cross-section and parallel with the channel walls) is generally parallel with the facing sheet(s). The support elements are made from a fiber-reinforced composite ceramic material wherein the orientation of the fibers within the support is controlled to achieve high strength and stiffness in the support.

The bonded ceramic structures can be directly used, for example, as beam or panel members, or they can be combined with additional members or other high strength metal or ceramic parts to provide complex refractory high-strength structures. The design of the bonded ceramic structure imparts particularly high resistance to bending or crushing deformation thereto.

The facing sheet of this composite ceramic structure of the invention preferably consists of a sheet of composite ceramic material comprising a glass, glass-ceramic, or crystalline ceramic matrix in which is disposed an inorganic reinforcement phase. The inorganic reinforcement phase is preferably a fibrous reinforcement consisting, for example, of inorganic whiskers or fibers.

The channeled composite ceramic support elements are of modular design, each individual support comprising a continuous composite ceramic wall defining a circumferentially enclosed elongated channel. The wall consists of a glass, glass-ceramic, or crystalline ceramic matrix phase within which the fiber reinforcement phase, consisting of a multiplicity of inorganic fibers, is disposed. The fiber reinforcement is multidirectionally oriented within wall of the support structure, i.e., the fibers run in at least two and preferably more different directions. Multidirectional orientation is typically achieved by providing multiple layers or plies of aligned fibers within the wall, the layers being arranged in cross-ply orientation with respect to each other. This multidirectional orientation has the effect of insuring that some of the fibers traverse the corners of the channel wall, imparting high corner strength and enhancing crush resistance in the bonded structure.

The process for making the support elements generally comprises, first, providing a mandrel or similar support having a cross-sectional shape generally corresponding to the channel shape selected for the ceramic supports to be provided. A preform for the ceramic support is then built up on the mandrel by winding or otherwise applying on the mandrel one or more layers of inorganic reinforcing fibers thereto. The fibers are coated before, during, or after application to the mandrel with particles of a ceramic material selected from the group of glasses, thermally crystallizable glasses, or crystalline oxides.

Finally, the support preform is consolidated into an integral composite ceramic support element by heating it to a temperature at least sufficient to consolidate the particles of ceramic material into an integral matrix within which the inorganic reinforcing fibers are disposed. In general, consolidation may be carried out before or during the bonding of the support elements to the support sheets.

The method for producing the inventive sandwich-type structures contemplates seven general steps:

(1) a light weight core element of a desired geometry and of a desired material is fashioned;

(2) a skin element of a desired material is formed;

(3) a glass frit of a desired composition is prepared;

(4) the glass frit is applied to a surface of the skin element (and, optionally, onto the upper surface of the core element);

(5) the frit-coated surface of the skin element is brought into contact with the core element to provide a laminated structure;

(6) the laminated structure is fired to a temperature sufficiently high to sinter the particles together, i.e., to cause the glass to flow (but not so high as to thermally deform the core or skin element), and thereby bond together the skin and core elements; and then

(7) the bonded structure is cooled to room temperature (R.T.).

The bonding glass frit is prepared by comminuting glass of a desired composition to particles having diameters typically in the range of about 2-40 microns. Where desired, various ceramic fillers, e.g., zircon, aluminum titanate, mullite, and cordierite, may be included to vary the physical properties of the glass, e.g., the linear coefficient of thermal expansion thereof, and ceramic whiskers may be incorporated as reinforcement agents.

The glass particles and optional adjuvants (also in fine particulate form) are mixed into a vehicle system (customarily consisting of one or more organic liquids such as oils or other polymeric liquids). The resultant suspension is applied through such means as dipping, painting, and spraying, or in the form of a paste or as a frit-coated sheet. The last practice comprises depositing an organic suspension of particles onto a thin sheet of organic material, e.g., a polyester film, and drying. For example, the suspension will be continuously deposited onto a moving sheet as, for example, by doctor blading, and the resultant coated sheet cut into shapes of desired configurations and dimensions. Advantageously, the thickness of the particle layer on the sheet can be controlled quite accurately, the sheet applied to the precise location desired, and the frit will be spread uniformly over the bonding area. Nevertheless, because of the ease in application and the speed at which the suspension can be applied, spraying constitutes the preferred method of application.

Where the laminate contains several layers of bonding frit and/or where firing of the laminate is to be conducted in essentially non-oxidizing environments, e.g., neutral or reducing atmospheres, the laminate may, advantageously, be initially exposed to a temperature somewhat higher than about 250° C for a period of time adequate to achieve complete removal of the organic materials prior to sintering the glass frit. To insure adequate glass flow with consequent formation of a good bond between the skin and core members, firing of the laminate will conveniently be carried out at temperatures at least about 100° C above the softening point of the glass.

As can be recognized, the temperature capability of the inventive laminates is dependent upon the softening point of the bonding frit. Accordingly, for high temperature applications a thermally crystallizable glass is especially desirable. In such glasses not only will the crystal phase(s) generated in situ exhibit a melting point higher than the softening point of the original glass, but also the residual glassy phase will be small in volume and, customarily, will have a higher softening point than the parent glass. Most commonly, the crystallization in situ of the glass takes place immediately following the sintering of the glass particles during the firing step.

For applications where the highest exposure temperature will not exceed about 500° C, simple glass skins and/or cores may be employed. Whereas borosilicate glass compositions can be operable, the more refractory aluminosilicate glasses have been preferred. The alkaline earth aluminosilicate glasses disclosed in U. S. Patent No. 3,496,401 have been found particularly desirable. Those glasses consist essentially, expressed in terms of weight percent on the oxide basis, of

| | | | |
|---|---|---|---|
| $SiO_2$ | 55-70 | Alkaline earth oxide | 10-25 |
| $Al_2O_3$ | 13-25 | $B_2O_3$ | 0-10 |

Furthermore, to enhance the mechanical strength and toughness of the glass components, ceramic fibers and/or whiskers such as graphite, mullite, spinel, zircon, $Al_2O_3$, BN, $B_4C$, SiC, $Si_3N_4$, and $ZrO_2$ may be

incorporated therein to provide reinforced composite bodies. U. S. Patent No. 4,626,515 describes the preparation of composite bodies consisting essentially of an alkali metal-free, alkaline earth aluminosilicate glass matrix containing both about 5-60% by weight SiC whiskers and about 15-70% by volume ceramic fibers, the total content of whiskers and fibers not exceeding about 70% by weight. Those composites are greatly preferred for glass members comprising the skin and/or core elements of the inventive laminated structures. The patent notes the special utility of Corning Code 1723, an alkaline earth aluminosilicate glass marketed by Corning Glass Works, Corning, New York, as the matrix glass. That glass, falling within the scope of Patent No. 3,496,401, supra, has the following approximate composition, expressed in terms of weight percent on the oxide basis, of

| | | | |
|---|---|---|---|
| $SiO_2$ | 57 | CaO | 10 |
| $Al_2O_3$ | 16 | MgO | 7 |
| BaO | 6 | $B_2O_3$ | 4 |

Corning Code 1723 has a softening point of about 903°C, an annealing point of about 710°C, and a strain point of about 665°C. It will be recalled, however, that the bonding glass frit must have an annealing point at least about 100°C below the annealing point of Corning Code 1723, when that glass constitutes the skin and/or core element of the laminated structure, in order to avoid thermal deformation thereof as the bonding frit is being fused. It logically follows, then, that the temperature to which the laminated structure is operable is governed by the annealing point of the bonding glass frit. Hence, when the laminated structure is subjected to temperatures above the annealing point of the bonding glass frit, movement (substantial flow at very high temperatures) will occur in the bonding glass giving rise to thermal deformation of the laminated structure. Thus, where a laminated structure consisting of a simple glass skin and/or core member is to be exposed for extended periods at elevated temperatures, 500°C has been suggested as a practical and safe maximum.

It will be appreciated, however, that the inclusion of ceramic fibers and/or whiskers to enhance the mechanical strength and toughness of glass components can, at the same time, raise the temperature at which the glass will deform and flow. Accordingly, where an alkali metal-free alkaline earth aluminosilicate glass strongly reinforced with ceramic fibers and/or whiskers is employed, laminated structures prepared therefrom may be used in applications up to about 700°C.

As was indicated previously, the most refractory sandwich-type structures utilize ceramic and/or glass-ceramic skin and core elements with a thermally-crystallizable glass comprising the bonding glass frit element. It will be appreciated that the linear coefficients of thermal expansion of the three members must be quite close to insure sound bonding therebetween. Accordingly, inasmuch as the coefficient of thermal expansion of a glass-ceramic can be modified relatively easily through changes in composition and/or heat treatment, the preferred practice contemplates the use of a glass-ceramic as a skin and/or core member. In the most preferred practice, the bonding frit will have essentially the same base composition as that of the glass-ceramic skin and/or core member such that, upon sintering to provide a bond between the skin and core members, the glass crystallizes in situ to form the same crystal phase(s) present in the glass-ceramic. As a result of that practice, the linear coefficients of thermal expansion of the crystallized bonding frit and of the glass-ceramic element(s) will be virtually identical.

Although glass-ceramic bodies wherein an alkali metal oxide-containing crystal, such as β-eucryptite solid solution, β-quartz solid solution, β-spodumene solid solution, and nepheline, constitutes the predominant crystal phase can comprise the skin and core members, bodies exhibiting higher refractoriness are obtainable where an alkaline earth metal oxide-containing crystal, such as cordierite, Ba-osumilite, celsian, and anorthite, constitutes the predominant crystal phase. Such more highly refractory bodies comprise the preferred embodiment of the inventive laminated structures, with glass-ceramics containing Ba-osumilite, celsian, or anorthite as the predominant crystal phase constituting the most preferred embodiment.

Ba-osumilite-containing glass-ceramic bodies are explicitly disclosed in U. S. Patent No. 4,464,475. Those bodies, which are observed as being useful as matrices for ceramic fiber reinforced structures, consist essentially, expressed in terms of weight percent on the oxide basis, of:

| | | | | | |
|---|---|---|---|---|---|
| $SiO_2$ | 51-68 | BaO | 3.5-15 | $Ta_2O_5$ | 0-10 |
| $Al_2O_3$ | 17.5-30 | Si | 0-1 | $TiO_2$ | 0-12 |
| MgO | 5-12 | $Nb_2O_5$ | 0-20 | $ZrO_2$ | 0-6 |

U. S. Patent No. 4,615,987 discloses glass-ceramic bodies in the alkaline earth aluminosilicate system wherein the predominant crystal phase is selected from the group of anorthite and its pseudo-binaries with mullite, cordierite, Ba-osumilite, albite solid solution, $Al_2O_3$, $SiO_2$, $CaO \cdot SiO_2$, and gehlenite. The bodies are explicitly described as being useful as matrices for ceramic fiber and/or whisker reinforced structures and consist essentially, expressed in terms of weight percent on the oxide basis, of:

| | | | | |
|---|---|---|---|---|
| CaO | 0-25 | | MgO | 0-15 |
| SrO | 0-30 | | $Na_2O$ | 0-4 |
| CaO+SrO | 10-30 | | $K_2O$ | 0-6 |
| $Al_2O_3$ | 25-38 | | $TiO_2$ | 0-12 |
| $SiO_2$ | 35-60 | | $ZrO_2$ | 0-15 |
| BaO | 0-25 | | $As_2O_3$ | 0-3 |
| | | $BaO+MgO+Na_2O+K_2O+TiO_2+As_2O_3$ | 0-30 | |

EP-A- (87 310 395.6) based on USSN 943,072, also discloses glass-ceramic bodies in the alkaline earth aluminosilicate system suitable as matrices for ceramic fiber and/or whisker reinforced structures, but which exhibit higher refractoriness than the glass-ceramics of U. S. Patent No. 4,615,987. These inventive glass-ceramics consist essentially, expressed in terms of weight percent on the oxide basis, of 16-20% CaO, 38.5-46% $Al_2O_3$, 35-42% $SiO_2$, and up to 10% total of at least one nucleating agent in the indicated proportion selected from the group of 0.1-3% $Cr_2O_3$, 0.25-3% $HfO_2$, 2-5% $MoO_3$, 0.25-3% $Nb_2O_5$, 0.25-3% $Ta_2O_5$, 0.25-3% $WO_3$, and 1-10% $ZrO_2$, wherein $Al_2O_3$ is present in an amount which is at least 5 mole percent and up to 50 mole percent in excess of that present in stoichiometric anorthite. The predominant crystal phases are anorthite and mullite and/or $\alpha$-$Al_2O_3$.

Table I records several thermally crystallizable glass compositions especially suitable for use in the present invention, expressed in terms of parts by weight on the oxide basis. Example 1 crystallizes in situ to yield Ba-osumilite as the predominant crystal phase in accordance with U. S. Patent No. 4,464,475. Examples 2-6 crystallize in situ to yield anorthite as the predominant crystal phase with a minor amount of cordierite in accordance with U. S. Patent No. 4,615,987. Examples 7 and 8 crystallize in situ to produce anorthite and mullite as the predominant crystal phases in accordance with the above-mentioned application. Example 9 crystallizes in situ to provide celsian ($BaO \cdot Al_2O_3 \cdot 2SiO_2$) as the principal phase with significant contents of sanidine ($K_2O \cdot Al_2O_3 \cdot SiO_2$), and Examples 10 and 11 crystallize in situ to yield cordierite as the predominant phase with a minor concentration of anorthite. Example 12 crystallizes in situ to anorthite and a minor amount of mullite with some $B_2O_3$-rich residual glass which promotes flow of the frit. Inasmuch as the sum of the individual components of each composition closely approximates 100, for all practical purposes the values reported can be deemed to represent weight percent. The actual batch ingredients for the glasses may comprise any materials, either an oxide or other compound, which, when melted together with the remainder of the batch, will be converted into the desired oxide in the proper proportions. For example, $CaCO_3$ can furnish the source of CaO.

In the laboratory activity described hereinbelow, the batch ingredients were compounded, ballmilled together to assist in obtaining a homogeneous melt, and the mixture charged into platinum crucibles. After covering, the crucibles were introduced into a furnace operating at about 1650°C and the batches melted for about 16 hours without stirring. A portion of each melt was poured onto a steel plate to form a generally circular slab which was transferred immediately to an annealer. The second portion of each melt was poured as a relatively fine stream into a container of water to yield finely-divided particles of glass, a practice termed in the glass art "drigaging." The glass particles were dried and comminuted to particles having an average size less than 10 microns. To insure the absence of any tramp large particles, the material was passed through a No. 100 United States Standard Sieve (149 microns).

## Table I

|  | 1 | 2 | 3 | 4 | 5 | 6 |
|---|---|---|---|---|---|---|
| $SiO_2$ | 53.14 | 44.8 | 44.0 | 45.6 | 46.4 | 47.2 |
| $Al_2O_3$ | 24.93 | 36.3 | 36.5 | 36.2 | 36.0 | 35.8 |
| MgO | 8.44 | 2.8 | 1.4 | 4.1 | 5.5 | 6.9 |
| BaO | 12.48 | - | - | - | - | - |
| $As_2O_3$ | 1.0 | 0.5 | 0.5 | 0.5 | 0.5 | 0.5 |
| CaO | - | 16.1 | 18.2 | 14.1 | 12.1 | 10.1 |

|  | 7 | 8 | 9 | 10 | 11 | 12 |
|---|---|---|---|---|---|---|
| $SiO_2$ | 39.5 | 39.5 | 43.1 | 48.1 | 48.9 | 37.4 |
| $Al_2O_3$ | 38.5 | 38.5 | 22.8 | 35.6 | 35.4 | 36.3 |
| MgO | - | - | - | 8.3 | 9.7 | - |
| BaO | - | - | 24.0 | - | - | - |
| $As_2O_3$ | 0.5 | 1.0 | 0.75 | 0.5 | 0.5 | 0.5 |
| CaO | 18.4 | 18.4 | - | 8.1 | 6.1 | 17.4 |
| $ZrO_2$ | 3.0 | 3.0 | 3.0 | - | - | 2.8 |
| $K_2O$ | - | - | 6.33 | - | - | - |
| $B_2O_3$ | - | - | - | - | - | 5.7 |

In the following set of ten examples, powders (frits) of Examples 1, 2, 7, and 8 were utilized to bond SiC fiber reinforced glass-ceramic skins to a variety of ceramic and glass-ceramic honeycombs, thereby forming strengthened sandwich-type structures. The bonding frits were applied as a paste, by spraying, or as a tape cast sheet.

Two paste recipes were employed. The first comprised a slurry consisting, in weight percent, of 73.5% frit and 26.5% extender, the latter component being No. 324 pine screen oil or No. 175 Squeegee Oil marketed by Drakenfeld Color Company, Washington, Pennsylvania. The second comprised a slurry consisting, in weight percent, of 69% frit and 31% ethylene glycol. A thin coating ($\approx$1 mm thickness) of the paste was applied to a surface of the skin member using a spatula.

Slips for spraying were prepared by adding isopropanol to either of the frit pastes (15 ml isopropanol to 34 grams of pine screen oil-based paste and 11 ml isopropanol to 36.25 grams of ethylene glycol-based paste). The resulting slips were mixed with a magnetic stirring bar for about one hour and then sprayed onto a surface of a skin member using a standard air gun at a gauge pressure of 30 psi.

Preparation of frit sheet (0.003-0.005" thickness) suitable for tape casting involved the following steps:

(1) 500 grams of powdered glass or glass-ceramic (along with any reinforcing or toughening agents such as ceramic whiskers), 333 grams of TAM ceramic binder 73210 marketed by Meforamic Sciences, Inc., Carlsbad, California, and 20.9 grams of Emphos PS-21A surfactant, marketed by Witco Chemical Corporation, New York, New York, were charged into a cylindrical plastic container and ballmilled on a roller mill for 12-16 hours utilizing alumina balls;

(2) the alumina balls were withdrawn from the container and the suspension allowed to de-aerate by roller milling for an additional 12-16 hours;

(3) the suspension was then cast onto a silicone-coated polyester carrier film of about 0.002" ($\approx$50 microns) thickness utilizing a double-edged doctor blade having dimensions of about 6" width and 0.025" thickness; and

(4) after air drying, the coated film was cut into desired lengths and the coating peeled away from the carrier film, resulting in frit sheeting or tape.

It was found to be advantageous to apply a thin coating of screen oil on both surfaces of the frit tape in order to promote adherence of the frit to both the skin and the honeycomb prior to the sintering firing.

Additions of SiC whiskers and particles of partially-stabilized $ZrO_2$ at the 10% by weight level were made to the bonding frits and SiC whiskers at the 20% by weight level were made to honeycombs as reinforcing agents. Such additions were made following the steps below:

(a) To 150 ml distilled water and 750 ml isopropanol were added 5 grams of SiC whiskers or partially-stabilized $ZrO_2$ particles and 45 grams of the frit, and the mixture then ballmilled for 30 minutes to deagglomerate the whiskers and produce a uniform suspension. The SiC whiskers employed had diameters of about 1 micron or somewhat less and lengths of about 40-50 microns. The $ZrO_2$ particles had dimensions of less than 10 microns.

(b) The suspension was vacuum filtered.

(c) The resulting filter cake was dried.

A 10% by weight addition of Corning 1723 glass was made to the $ZrO_2$-containing frit to offset the reduction in the overall linear coefficient of thermal expansion caused by the incorporation of the $ZrO_2$. Corning 1723 glass exhibits a linear coefficient of thermal expansion of about $46 \times 10^{-7}°/C$. In the crystallized state, Example 1 exhibits a linear coefficient of thermal expansion of about $25 \times 10^{-7}°/C$, Example 2 exhibits a linear coefficient of thermal expansion of about $43 \times 10^{-7}°/C$, and Example 7 exhibits a linear coefficient of thermal expansion of about $50 \times 10^{-7}°/C$.

Pastes of $ZrO_2$-containing frits and pastes and spray slips of SiC whisker-containing frits were prepared using the recipes recorded above. No changes were required in firing practice for laminated structures bonded by the modified frits.

Regardless of the application technique employed in coating a surface of a skin member with the bonding frit, the honeycomb was pressed into the coating by hand pressure. No preliminary drying operation was performed. Good bonding of the sandwich-type structure was generally achieved after firing in air in the range of about 1150°C-1250°C for periods of time up to three hours at maximum temperature. A typical operable firing schedule consisted of raising the temperature from R.T. to 875°C at a rate of about 300°C/hour, optionally holding that temperature for one hour, raising the temperature to 1250°C at a rate of about 200°C/hour, maintaining that temperature for three hours, and then cooling to room temperature at a rate of about 150°C/hour. Firing can also be carried out in essentially non-oxidizing atmospheres such as nitrogen, helium, argon, and in a vacuum.

The test specimens employed consisted of up to 2" X 2" X 1" squares of honeycomb. In each instance the skin member consisted of a glass-ceramic reinforced with SiC fibers in the amount of 35-40% by volume. Grinding the surface of the skin member to promote surface roughness prior to applying the bonding frit appeared to have a beneficial effect with respect to the strength of the bonding that was achieved in the laminated structures.

Table II reports laboratory work conducted on honeycombs of five different compositions. Honeycomb A consisted of a sintered ceramic containing cordierite and mullite as the principal phases which is marketed by Corning Glass Works under the designation Corning 9480. Honeycomb B consisted of a sintered ceramic containing aluminum titanate and mullite as the principal phases which has a composition within the scope of U. S. Patent No. 4,483,944. Honeycomb C consisted of a sintered ceramic containing cordierite as the principal phase which has a composition within the scope of U. S. Patent No. 3,885,977. Honeycomb D consisted of a body of sintered zircon. Honeycomb E consisted of a glass-ceramic body having the composition of Example 7 in Table I reinforced through the inclusion of 20% by weight SiC whiskers.

In Table II, the designation "poor" under the legend "Bond" signifies that the structure separated, usually at the bonding frit-skin interface, either spontaneously during cooling or subsequently upon the application of mild hand pressure.

## Table II

### Example I

| Bonding Frit | Skin | Honeycomb | Bond |
|---|---|---|---|
| Example 1 (pine oil paste) | SiC fiber/Example 1 | Example A | Good |
| Example 1 (pine oil paste) | SiC fiber/Example 1 | Example B | Good |
| Example 1 (pine oil paste) | SiC fiber/Example 1 | Example C | Poor |

### Example II

| Bonding Frit | Skin | Honeycomb | Bond |
|---|---|---|---|
| Example 7 (pine oil paste) | SiC fiber/Example 1 | Example A | Good |
| Example 7 (pine oil paste) | SiC fiber/Example 1 | Example B | Good |
| Example 7 (pine oil paste) | SiC fiber/Example 1 | Example C | Poor |

### Example III

| Bonding Frit | Skin | Honeycomb | Bond |
|---|---|---|---|
| Example 7 (pine oil paste) | SiC fiber/Example 7 | Example A | Poor |
| Example 7 (pine oil paste) | SiC fiber/Example 7 | Example B | Poor |
| Example 7 (pine oil paste) | SiC fiber/Example 7 | Example C | Poor |
| Example 7 (pine oil paste) | SiC fiber/Example 7 | Example D | Good |
| Example 7 (pine oil paste) | SiC fiber/Example 7 | Example E | Good |

## Example IV

| Bonding Frit | Skin | Honeycomb | Bond |
|---|---|---|---|
| SiC whiskers/ Example 7 (pine oil paste) | SiC fiber/Example 7 | Example D | Good |
| SiC whiskers/ Example 7 (pine oil paste) | SiC fiber/Example 7 | Example E | Good |

## Example V

| Bonding Frit | Skin | Honeycomb | Bond |
|---|---|---|---|
| SiC whiskers/ Example 7 (pine oil spray) | SiC fiber/Example 7 | Example E | Good |
| SiC whiskers/ Example 7 (glycol spray) | SiC fiber/Example 7 | Example E | Good |

## Example VI

| Bonding Frit | Skin | Honeycomb | Bond |
|---|---|---|---|
| $ZrO_2$+1723/ Example 7 (pine oil paste) | SiC fiber/Example 7 | Example D | Good |
| $ZrO_2$+1723/ Example 7 (pine oil paste) | SiC fiber/Example 7 | Example E | Good |
| $ZrO_2$+1723/ Example 7 (glycol paste) | SiC fiber/Example 7 | Example D | Good |
| $ZrO_2$+1723/ Example 7 (glycol paste) | SiC fiber/Example 7 | Example E | Good |

## Example VII

| Bonding Frit | Skin | Honeycomb | Bond |
|---|---|---|---|
| Example 7 (tape cast) | SiC fiber/Example 7 | Example D | Good |

## Example VIII

| Bonding Frit | Skin | Honeycomb | Bond |
|---|---|---|---|
| SiC whiskers/ Example 7 (tape cast) | SiC fiber/Example 7 | Example D | Good |

## Example IX

| Bonding Frit | Skin | Honeycomb | Bond |
|---|---|---|---|
| 50/50 Example 2/ Example 7 | | | |
| (pine oil paste) | SiC fiber/Example 7 | Example E | Good |
| (glycol paste) | SiC fiber/Example 7 | Example E | Good |
| (pine oil spray) | SiC fiber/Example 7 | Example E | Good |
| (glycol spray) | SiC fiber/Example 7 | Example E | Good |

## Example IX

| Bonding Frit | Skin | Honeycomb | Bond |
|---|---|---|---|
| Example 9 | SiC fiber/Example 8 | Example E | Good |

The above laboratory work indicated three vital parameters involved in achieving good bonding between the members of the structure:

(1) thermal expansion compatibility between the skin and core elements;

(2) the sintering and flow characteristics of the bonding frit; and

(3) the simultaneous or subsequent crystallization behaviour of the frit.

The criticality of securing minimal thermal expansion mismatch in frit-bonded, fiber reinforced structures was especially evident in structures composed of a SiC fiber reinforced Example 7 glass-ceramic skin and a SiC whisker reinforced Example 7 glass-ceramic honeycomb. The linear coefficient of thermal expansion (25°-1000°C) of SiC fiber reinforced Example 7 glass-ceramic is about $47X10^{-7}/°C$ and that of SiC whisker reinforced Example 7 glass-ceramic is about $48X10^{-7}/°C$. For example, where bonding of those two members was attempted employing Example 2 frit, which has a linear coefficient of thermal expansion in the glass-ceramic state of about $43X10^{-7}/°C$, the structures generally failed during the cooling stage of the firing process. Again, where bonding of those two members was attempted employing Example 7 frit, which has a linear coefficient of thermal expansion in the glass-ceramic state of about $50X10^{-7}/°C$, the structures usually survived the firing process, but frequently exhibited crazing cracks. A 50/50 blend (equal proportions on a weight basis) of the Example 2 and Example 7 bonding frits (calculated linear coefficient of thermal expansion of $46.5X10^{-7}/°C$) produced well-bonded structures evidencing no sign of crazing. Hence, the physical mixing

10

of frits having high and low coefficients of thermal expansion permits custom matching of the bonding frit to skin and core members of various compositions.

The other significant parameter, viz., the sintering and flow characteristics of the bonding frit, can be expressed as the temperature interval between the onset of viscous flow ($T_g$ or glass transformation temperature) and the beginning of widespread crystallization ($T_{Cryst}$). Each of Examples 1, 2, and 7 has a relatively wide $T_{Cryst}$-$T_g$ range; differential thermal analyses indicating a value for that range of about 100°-150°C. The actual data are recorded below:

| Example | $T_g$ | $T_{Cryst.}$ |
|---------|-------|--------------|
| 1 | 940°C | 1040°C |
| 2 | 855°C | 975°C |
| 7 | 860°C | 990°C |

Because the above frits are high temperature glass-ceramics, rather than a traditional solder glass, the use temperatures thereof are extended to levels comparable to those of the skin and core elements. The capability of applying the bonding frits through spraying is a very valuable attribute inasmuch as it enables the production of very uniform and thin coatings. Such capability makes possible close control of frit thickness and may make possible both erosion resistant and oxidation resistant coatings for fiber reinforced composite structures.

The illustrative examples described above were directed to the fabrication of sandwich-type composites wherein a honeycomb structure served as the interior or core member. Further reduction in overall mass of such composites can be secured, however, through the use of a low density material as the core member. Hence, by applying the above-defined bonding principles, it is possible to bond a lightweight, porous glass, glass-ceramic, or ceramic core member to a glass, glass-ceramic, or ceramic skin member.

One especially useful type of porous body is described in U. S. Patent No. 4,442,175. That patent discloses cellular ceramic bodies having micaceous microstructures exhibiting high mechanical strength and densities less than 15 lbs/ft$^3$ ($\approx 0.23$ g/cm$^3$). The bodies consist essentially of an ion exchange product of a large donor cation and a synthetic lithium and/or sodium water-swelling mica. Such bodies are prepared by:

(a) forming a crystal-containing gel from a synthetic lithium and/or sodium water-swelling mica selected from the group of fluorhectorite, hydroxyl hectorite, boron fluorphlogopite, hydroxyl boron phlogopite, and solid solutions among those and between those and other structurally-compatible species selected from the group of talc, fluortalc, polylithionite, fluorpolylithionite, phlogopite, and fluorphlogopite, the gel containing about 2.5-25%;

(b) subjecting the gel to high shear blending action;

(c) adding a surfactant in an amount of about 0.1-2% by weight to cause bubble formation leading to the development of a froth as the gel is sheared;

(d) while blending, adding a source of an exchangeable large cation as an ion donor to cause an ion exchange reaction to take place between the large cations of said donor and the lithium and/or sodium ions of said lithium and/or sodium water-swelling mica, thereby producing a frothed gel containing ion-exchanged mica crystals;

(e) delivering said frothed, ion-exchanged gel from the blender to form a body of desired configuration;

(f) allowing the ion exchange to proceed to essential completion, thereby thickening and setting the gel to a solid body; and then

(g) drying said body.

A lithium fluorhectorite foam body having a thickness of about 19 mm, a density of about 0.096 g/cm$^3$, and exhibiting a modulus of rupture of about 60 psi was prepared in accordance with Patent No. 4,442,175, generally in the manner and of the composition of Example 9 of that patent. (The lithium fluorhectorite had an approximate composition, in weight percent, of 64.5% $SiO_2$, 10.8% MgO, 8.0% $Li_2O$, and 16.7% $MgF_2$.)

A slip for spraying was prepared by suspending a frit of a thermally devitrifiable, zinc borosilicate-type solder glass in a vehicle consisting of pine screen oil and isopropanol. A particularly useful glass consists essentially, by weight, of about 62.5% ZnO, 2.5% MgO, 22.5% $B_2O_3$, and 12.5% $SiO_2$ having a coefficient of thermal expansion of about 42X10$^{-7}$/°C. The top and bottom surfaces of the foam body were coated with the frit and the coated body was fired for one hour in air at 750°C. This firing appears to densify the surface of the core body, thereby providing a stronger surface for subsequently bonding the skin members thereto.

Two skin or face sheet members were prepared from four plies of SiC fiber reinforced Corning Code 1723 glass, the fiber content comprising about 50% by volume. The four plies were stacked in alternating symmetrical 0° and 90° orientations to yield a laminate of about 1 mm thickness.

Additional slip was sprayed onto the surface of each face sheet member to be joined to the foam core member. [This frit was chosen because of its close match in thermal expansion to that of the SiC fiber reinforced Corning Code 1723 glass, and because its sintering temperature is below the recrystallization temperature of the foam core ($\approx 850°$C).]

The laminates were then applied to the top and bottom surfaces of the core member and the resulting sandwich was transferred to an electrically-heated furnace. The temperature of the furnace was raised at about 300°C/hour to 750°C, that temperature was maintained for about one hour, and then the sandwich was cooled to ambient temperature at approximately 200°C/hour.

The face sheets were well bonded to the foam core, and, when the sandwich was broken, the failure was in the foam body, thereby indicating that the frit bond was stronger than the core.

This type of composite structure recommends itself for applications where very low weight and/or low thermal conductivity is desired and use temperatures up to 700°C are contemplated. The face sheets are extraordinarily strong and the foam core exhibits inherent toughness due to its micaceous microstructure.

Another particularly useful type of cellular bodies is disclosed in U. S. Patent No. 4,112,032. That patent describes the preparation of amorphous, porous silica-containing articles having pore diameters ranging between about 100Å-1 micron, wherein at least 80% of the pores therein fall within ±30% of the average pore diameter. The articles are produced through gelation of aqueous alkali metal silicate and/or colloidal silica solutions, optionally containing dispersed particulate phases, with organic reagents followed by a leaching step. Uniformity of pore size is achieved through careful control of such variables as the ratio of alkali metal silicate to colloidal silica solutions, the concentration of silica, the amount of dispersed phase employed, and the like.

An amorphous, porous potassium silicate body having a thickness of about 10 mm, an average pore diameter of about 1800Å, a density of about 0.35 g/cm$^3$, and exhibiting a modulus of rupture of about 100 psi was prepared generally in the manner and of the composition of Example 6 of Patent No. 4,112,032. (The base composition therefor consisted essentially, in weight percent, of 90% potassium silicate solution, 10% colloidal silica solution.)

A paste was prepared by suspending frit of a thermally devitrifiable solder glass of the type disclosed in U. S. Patent No. 3,488,216 in a vehicle consisting of pine screen oil. The crystal phase developed is a lead titanate. One particularly useful glass of this type consists essentially, in weight percent, of about 64% PbO, 1% Al$_2$O$_3$, 2% B$_2$O$_3$, 16% SiO$_2$, and 16% TiO$_2$, and having a coefficient of thermal expansion of about 5x10$^{-7}$/°C.

Two skins or face sheet members were prepared from four plies of a graphite fiber reinforced borosilicate glass, viz., Corning Code 7761 glass, the fiber content constituting about 55% by volume. The four plies were stacked in alternating symmetrical 0° and 90° orientations to produce a laminate of about 1.9 mm thickness. Corning Code 7761 consists essentially in weight percent, of about 2.7% K$_2$O, 18.8% B$_2$O$_3$, and 78.5% SiO$_2$, and exhibits a coefficient of thermal expansion (0°-300°C) of about 28x10$^{-7}$/°C.

The frit paste was applied with a spatula to the surface of each face sheet member to be bonded to the porous core member. [This frit was chosen because of its close match in thermal expansion to that of the graphite fiber reinforced Corning Code 7761 glass, and because its sintering temperature is below the softening point of Corning Code 7761 glass ($\approx$ 820°C).]

The skin laminates were thereafter applied to the top and bottom surfaces of the core member and the resulting sandwich was introduced into an electrically-heated furnace. The temperature of the furnace was raised at about 400°C/hour to 750°C, that temperature was maintained for about 30 minutes, and the sandwich then cooled to room temperature at about 300°C/hour.

The skins were well bonded to the porous core member, and, when the sandwich was broken, the failure occurred in the porous body, thereby indicating that the frit bond was stronger than the core.

This type of composite structure is especially useful in applications where very low weight and low thermal expansion are desired at use temperatures up to $\approx 500°$C. These structures recommend themselves as support elements for lightweight space mirrors and structural sheathing for space vehicles.

The bonded composite ceramic structures of the further embodiment of the invention are best made employing composite ceramic materials such as have been recently developed for applications wherein strength, toughness, and creep resistance at high temperatures are required. These may generally be described as fiber- and/or whisker-reinforced glasses, glass-ceramics (i.e., crystalline ceramics made by crystallizing glasses), and conventional ceramics (i.e., crystalline ceramics made by consolidating or fusion-casting non-glass forming crystalline oxide materials) wherein the fibers and/or whiskers enhance the high-temperature physical properties of the matrix glasses, glass-ceramics, or ceramics.

The use of inorganic whiskers and fibers to reinforce glasses, glass-ceramics and ceramics is well known. Whiskers have frequently been characterized in the literature as relatively short, single-crystal fibers of small diameter (typically less than 100 microns), whereas fibers, while of similar diameter, are considered to be multicrystalline or amorphous and are generally longer than whiskers, so that they can be used in woven or otherwise interlocking bundles, yarns, or cloth.

The mechanism of strengthening of glass, glass-ceramic, or ceramic bodies by fibers is considered to be that of load transfer by the matrix to the fibers through shear. This load transfer shifts stress from the glass or ceramic matrix to the relatively long, high modulus fibers, while the fibers at the same time may act to impede crack propagation in the matrix material.

Whiskers are thought to impart strengthening by a similar mechanism, but load transfer to whiskers by the matrix is more limited due to the limited length and aspect ratio of the whiskers. Theoretically, a whisker which is sufficiently short will not be loaded to the breaking point by the matrix under stress, and therefore full advantage cannot be taken of the high strength of the whiskers. However, since whiskers are typically incorporated as a randomly dispersed phase in a selected glass or ceramic matrix, rather than in a preferential alignment as with fibers, the physical properties of the composites are generally more isotropic.

Among the whiskers and fibers which have been suggested for use as reinforcement for nonmetal (ceramic) matrix materials are silicon carbide, silicon nitride, alumina and carbon whiskers. The use of such whiskers to impart improved strength and toughness to alumina, boron carbide, and mullite ceramics is described in U.S. Patent No. 4,543,345. U.S. Patents Nos. 4,615,987 and 4,626,515 describe ceramic composites wherein the matrix phases consist of glasses or glass-ceramics.,

Prior art structures designed for rigidity and/or strength frequently have designs such as facing sheets and corrugated or pleated stiffening or support elements. Rigidity in such structures depends largely on the inherent stiffness or resistance to deformation of the corrugated or pleated elements, with the bending or crushing of such structures typically resulting from the failure of the members along arc portions or at corner points.

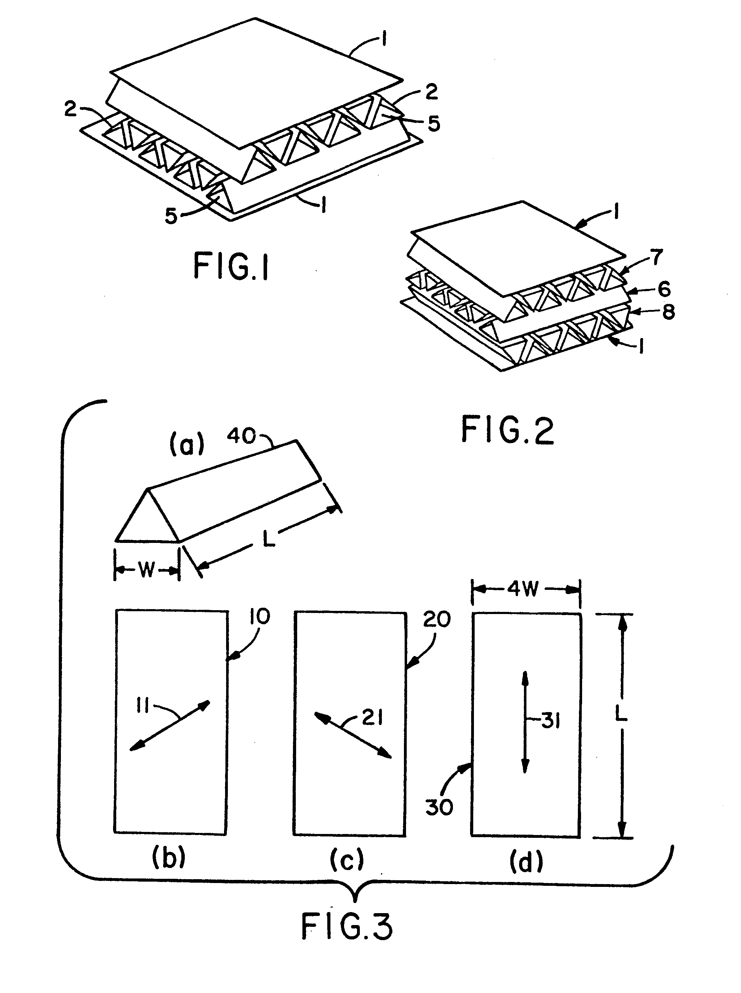

As schematically illustrated in a preferred embodiment in Fig. 1, which is a partially exploded view of a bonded ceramic structure in accordance with the invention, the bonded structure generally comprises discrete stiffening or support elements 2. These are shown in Fig. 1 as being of triangular prism cross-section, although other polyhedral cross-sections could be used, and in the actual completed structure the support elements would be bonded to the facing sheets 1 and also preferably to each other. The triangular prism elements are formed by circumferential wall segments 5, and are made from a fiber-reinforced composite ceramic material exhibiting high stiffness so that they strongly resist deformation by corner bending or wall flexing.

It is not essential that all of the support elements in the array of elements making up the ceramic structure be bonded to a facing sheet since, as indicated in Fig. 1, a bonded parallel array of support elements arranged in alternating upright and inverted positions itself forms planar surfaces. Fig. 2 of the drawing, which is another schematic partially exploded view, illustrates a ceramic structure according to the invention comprising a more complex sandwiched support element array. In Fig. 2, a central array or sub-array 6 of the support elements is positioned for bonding between opposing sub-arrays 7 and 8, with facing sheets 1 to be bonded only to the latter two sub-arrays.

Components for the fabrication of a composite ceramic support element are schematically illustrated in Fig. 3 of the drawing. In Fig. 3, a mandrel 40 and three inorganic fiber mats 10, 20 and 30 are shown, each mat including fiber yarn or bundles (not individually shown) comprising largely parallel spun or bundled inorganic fibers predominantly directed, respectively, in the directions 11, 21, and 31 shown. Suitable dimensions for the mats relative to triangular mandrel 40, which mandrel could be used for laying up a triangular prism support member of length 1 and facing width w as shown against the mandrel, are shown adjacent mat 30. The mats may, if desired, consist of prepregs, i.e., with the fibers pre-impregnated with a suspension of particulate ceramic material.

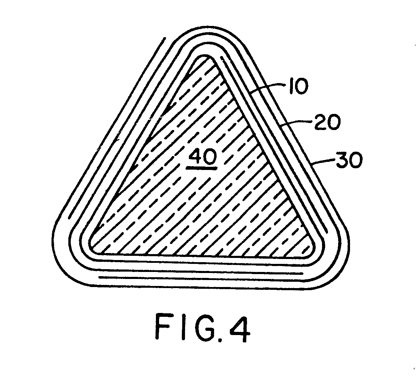

Fig. 4 shows a support element preform resulting when prepreg fiber mats such as shown in Fig. 2 are sequentially applied to a mandrel. The mats 10, 20, and 30 are applied in sequence so that the overlap of each mat occurs on a different face of mandrel 40. This equalizes wall thickness about the preform while insuring that all corners of the preform comprise three fiber layers, applied in cross-ply arrangement as indicated by the fiber group direction indicated in Fig. 3. The result after consolidation is a strong, continuous polyhedral wall.

As previously noted, the necessary strength and stiffness in the completed structure require that the fiber reinforcement within each support element include fibers or fiber groups which are multidirectionally oriented in the ceramic walls of the support so that some of the fibers traverse the corners in the walls. In this way, side or corner failure within the support cannot occur unless such fibers fail in tension. The fibers or fiber groups may comprise individual fibers, a fiber yarn, or fiber tows, or they may be provided in a fiber fabric or cloth wherein the warp or woof of the fabric defines the predominant direction of fiber travel therein.

As also previously noted, fiber multidirectionality (meaning at least two different fiber orientations) in the channel wall of the support is conveniently provided by cross-ply layering of the fibers. Desirably, each fiber layer will consist of a planar array of parallel, substantially unidirectional fibers imparting a definite prevailing fiber direction to the material. The layers can be provided, for example, by laying up parallel strands of matrix-impregnated fiber yarn.

Due to fiber multidirectionality, at least some of the fibers will be disposed so that a vector component of the fiber direction will be perpendicular to the channel axis of the support, i.e., a vector component directed circumferentially about the channel to assure fiber traverse of the corners of the channel walls. It is preferred however, that no fibers be directed purely circumferentially about the channel axis, since such an arrangement risks excessive fiber deformation and/or breakage during laydown and consolidation of the channel support preform. Most preferably, prevailing fiber directions will fall between ±60° of the direction of the channel axis of the support.

The particular ceramic material selected for use as the matrix in the composite wall of the ceramic preform and/or in the composite ceramic facing sheets is not critical, but will depend on the specific application for which the bonded composite ceramic structure is intended. For use at moderate temperatures, particulate glass may comprise the ceramic material. ("Ceramic" in the context of the present description is used in the broad sense to include glasses, glass-ceramics, and crystalline ceramics.) Examples of suitable glasses include alkaline earth aluminosilicate glasses, aluminosilicate glasses, borosilicate glasses and high silica glasses, all of which are known in the art. Particularly suitable are alkaline earth aluminosilicate glasses of

0 294 176

RO-$B_2O_3$-$Al_2O_3$-$SiO_2$ composition wherein RO is one or more oxides selected from the group MgO, BaO and CaO, as disclosed for example in U.S. Patent No. 4,626,515.

For use at somewhat higher temperatures, particulate thermally crystallizable glasses may be used as the ceramic material. Glasses of this type can be selected which will crystallize at the temperatures utilized to consolidate the ceramic material around the fibers. Thus a semicrystalline or fully crystallized matrix is provided which provides a composite more resistant to dimensional creep at high temperatures.

Examples of useful thermally crystallizable glasses for this application include lithium aluminosilicate, magnesium aluminosilicate, aluminosilicate, and alkaline earth aluminosilicate thermally crystallizable glasses. Particularly preferred are the alkaline earth aluminosilicate glasses and U.S. Patent No. 4,615,987 discloses specific examples of such glasses which may be employed in the practice of the present invention.

The highest refractoriness and creep resistance in a bonded ceramic structure according to the invention is provided where the selected matrix material is composed of a conventional ceramic material such as $Al_2O_3$, $ZrO_2$, mullite, boron carbide, silicon carbide, silicon nitride or the like, which materials are generally completely free of residual glass. However, higher consolidation temperatures and pressures are generally needed to convert the particulate ceramic material to a continuous matrix, and the strengths of the composite bodies tend to be somewhat lower than in the case of composites wherein the particulate ceramic material can be sintered as a glass.

The inorganic fibers used to provide the fiber reinforcement in the support element and, optionally, the facing sheets, may be selected from among the known fibers suitable for the reinforcement of ceramic materials. Depending upon the particular matrix selected, however, the fibers will typically be selected from the group consisting of carbon, alumina, silicon carbide, silicon nitride, boron nitride, boron carbide, zirconia, zircon, mullite, or spinel fibers.

In the case of either the facing sheets or the support elements, inorganic whisker reinforcement may also be provided to enhance the strength and/or toughness of the composite ceramic material. SiC whiskers are the preferred whisker reinforcement for this purpose although other whisker reinforcement materials such as hafnium carbide, silica, alumina or graphite may alternatively be employed.

Whereas the support members must comprise at least some fiber reinforcement to provide the requisite stiffness and corner strength, the inorganic reinforcement phase disposed within the facing sheets may consist entirely of whisker reinforcement, if desired. In any case, where whiskers are to be provided in the composite ceramic material forming the facing sheets or support elements, they are most conveniently introduced into the composition as a ceramic additive, i.e., mixed with the particulate ceramic material as it is applied to the inorganic fibers or fiber groups. The whiskers are ordinarily of sufficiently fine dimensions that they can be combined with the selected ceramic material without unduly modifying the coating characteristics thereof.

Bonding of the face sheet and support elements into a bonded composite ceramic structure may be accomplished using known cementing or sealing methods. For glass composites, glass frit sealing provides a suitable cementing technique, whereas for glass-ceramic or ceramic components, sealing with devitrifiable (thermally crystallizable) cements will provide a more refractory and creep-resistant bonding method.

The invention may be further understood by reference to the following theoretical example thereof, which is intended to be illustrative, and not limiting.


<u>Example X</u>

A known thermally crystallizable alkaline earth aluminosilicate glass suitable for use as a matrix material in a composite ceramic material is provided in particulate form. The glass has a composition consisting essentially, in parts by weight, of about 50.63 parts $SiO_2$, 27.66 parts $Al_2O_3$, 13.27 parts BaO, 3.44 parts MgO, and 1.0 parts $As_2O_3$, and can be thermally crystallized at temperatures of 1350°C and above to yield one or more of barium osumilite, cordierite, mullite, and barium aluminosilicate crystal phases depending upon the precise thermal treatment employed.

The particulate glass is milled to a fine powder (average particle size of 5 microns) and is mixed with a liquid vehicle to form a flowable slurry. The liquid vehicle consists essentially, in parts by weight, of 92.5 parts $H_2O$, 7.5 parts isopropyl alcohol, and 6 parts of polyvinyl acetate as an organic binder.

To prepare a glass-impregnated fabric or cloth of reinforcing fibers, i.e., a prepreg, a silicon carbide fiber yarn (Nicalon NLM 202 yarn) is passed through a burner flame to remove organic sizing on the fibers, and is then transported through the glass slurry to impregnate the yarn with particulate glass. The impregnated yarn is then wound around a rotating drum to provide a continuous sheet or mat having a substantially unidirectional fiber orientation, and is thereupon dried at room temperature to form a green flexible prepreg. The prepreg is then cut from the drum and flattened to form a quadrangular sheet for subsequent lamination and consolidation.

A graphite mandrel of triangular prismatic cross-section is next provided, the length of the mandrel being approximately 12 inches and the cross-section being an equilateral triangle such that the faces of the mandrel are of approximately 1 inch in width, but with slightly rounded long edges.

Three rectangular prepreg mats are next cut from the prepreg sheet above described, the mats having a width corresponding to the length of the mandrel and a length approximately four times the width of the faces of the mandrel prism. The mats are cut so that the first mat has a fiber direction parallel to the mat length (0° offset), while the second and third mats are cut with the fiber direction offset +60° and -60°, respectively, from the direction of the mat length.

The prepreg mats thus provided are next wound sequentially onto the graphite mandrel to form a support member preform. The mats are applied so that, for each mat, the starting point for winding is on a different face of the mandrel prism. The result of laying up the preform in the manner described is that one fiber layer comprises fibers directed longitudinally of the mandrel fibers (parallel with the direction of the preform channel), while the remaining two layers comprise fibers forming spiral windings of +30° and -30° pitch about the mandrel axis.

Consolidation and crystallization of the preform thus provided are simultaneously carried out by encasing the preform and mandrel in a tantalum metal casing and subjecting the encased components to hot isostatic pressing at 15,000 psi at 1350°C for one hour. Following consolidation and crystallization, the composite ceramic triangular prism support is removed from the graphite mandrel, yielding a channeled composite ceramic support member of high toughness and strength.

Composite ceramic facing sheets for the ceramic structural member are next provided by cutting rectangular mats from prepreg sheet produced as above described, and consolidating the mats to form the desired facing sheets by hot pressing or the like. Suitably, four 0° offset prepreg mats are stacked in cross-ply fashion, alternating the fiber direction 90° with each mat, and then the stack is hot pressed at 1450°C and 15,000 psi for 10 minutes to provide a consolidated crystallized composite ceramic sheet comprising cross-ply SiC fiber reinforcement.

A bonded composite ceramic structure is produced from the above-described components by combining multiple triangular support elements produced as described into a channel-parallel array and then covering the array with opposing facing sheets to form a sandwich structure. A planar array consisting of 23 triangular support elements produced as above described is assembled, consisting of alternating upright and inverted parallel prisms in face-to-face contact forming a close-packed linear array of support elements as generally shown in Fig. 2 of the drawing. A novel bonding cement forming no part of the present invention, made from the flowable slurry of thermally crystallizable glass above described but additionally containing 2 parts by weight of SiC whiskers for each 8 parts by weight of powdered glass, is applied to all contacting faces of each support element prior to assembly.

To the opposing faces of the planar support element array produced as described are applied opposing fiber-reinforced composite ceramic facing sheets made by the cross-ply lamination of prepreg mats in accordance with the above description. Again, bonding cement is applied to the contacting faces of the facing sheets and exposed bases of the support elements prior to assembly.

The assembled structure thus provided is finally heat-treated at 1400°C for 1-1/2 hours to sinter and crystallize the cement and to thereby bond the component support elements and facing sheets into a unitary composite ceramic structural member. This structure would exhibit excellent strength and toughness in service at temperatures of 1200°C or higher, due to the modular design of the fiber-reinforced support elements and the excellent creep resistance of the glass-ceramic matrix material employed.

## Claims

1. Laminated structure consisting essentially of:
   (a) a light weight interior member prepared from a glass, glass-ceramic, or ceramic;
   (b) an exterior member prepared from a glass, glass-ceramic, or ceramic; and
   (c) a bonding member prepared from a glass or glass-ceramic.

2. Laminated structure according to claim 1 wherein said interior member is a porous body, a corrugated body, or a honeycomb body.

3. Laminated structure according to claim 1 or 2, wherein said bonding member contains ceramic particles.

4. Laminated structure according to claims 1, 2 or 3 wherein said interior member consists of a porous body composed of a foam having a micaceous microstructure and said exterior member consists of an alkaline earth aluminosilicate glass, and said bonding member consists of a zinc borosilicate-type solder glass.

5. Laminated structure according to claims 1, 2, 3 or 4, wherein said interior member consits of an amorphous, porous silica-containing body, said exterior member consists of a borosilicate glass, and said bonding member consists of a thermally devitrifiable solder glass wherein the crystal phase developed is a lead titanate.

6. Laminated structure according to claims 1, 2, 3, 4 or 5, wherein at least one, or each of said interior and exterior members is reinforced through the entrainment of ceramic fibers and/or whiskers and said bonding member is reinforced through the entrainment of ceramic whiskers.

7. Laminated structure according to claim 1, wherein said interior and exterior members are opposing ceramic facing sheets, bonded to an array of channeled ceramic support elements positioned therebetween, the support elements having channel axes generally parallel with the facing sheets;

each facing sheet consisting of a sheet of composite ceramic material comprising a ceramic, glass or glass-ceramic matrix and an inorganic reinforcement phase disposed within the matrix;

each support element being formed of a continuous composite ceramic wall defining a circumferentially enclosed elongated channel, the composite ceramic wall comprising a glass, glass-ceramic, or ceramic matrix phase and a fiber reinforcement phase consisting of a multiplicity of inorganic fibers disposed with the matrix phase, the fiber reinforcement phase comprising fibers or fiber groups which are multidirectionally oriented within said walls.

8. Structure in accordance with claim 7 wherein the array of channeled support elements includes at least one bonded plane parallel sub-array of elements in wall-to-wall contact with each other.

9. Structure in accordance with claim 7 wherein the channeled ceramic support elements are of generally triangular cross-section.

10. Structure in accordance with claim 8 which comprises multiple parallel sub-arrays, and wherein:

(a) the channel axes of the supports in each sub-array are parallel with at least one facing sheet;

(b) the sub-arrays are adjoining and in bonded contact with each other; and

(c) the direction of the channel axes in at least one sub-array is transverse to the direction of the channel axes in at least one adjoining sub-array.

11. Structure in accordance with claim 8 wherein the fibers in the walls of the support elements are present as multiple fiber plies.

12. Structure in accordance with claim 11 wherein at least one fiber ply consists of parallel strands of fiber yarn.

13. Structure in accordance with claim 11 wherein the fiber plies are disposed in cross-ply fashion.

14. Structure in accordance with claim 8 wherein the fibers in the walls of the channeled support elements are provided in the form of three or more adjoining fiber yarn plies, the plies being disposed in cross-ply fashion with each ply comprising a fiber groups with a predominant fiber direction transverse to the predominant fiber direction of at least one adjoining ply.

15. A bonded composite ceramic structure comprising at least one ceramic facing sheet and one or more channeled ceramic support elements bonded to the facing sheet and having channel axes generally parallel thereto;

the facing sheet consisting of a sheet of composite ceramic material comprising a ceramic, glass or glass-ceramic matrix and an inorganic reinforcement phase disposed within the matrix; and

each support element being formed of a continuous composite ceramic wall defining a circumferentially enclosed elongated channel, the composite ceramic wall comprising a glass, glass-ceramic, or ceramic matrix phase and a fiber reinforcement phase consisting of a multiplicity of inorganic fibers disposed within the matrix phase, the fiber reinforcement phase comprising fibers or fiber groups which are multidirectionally oriented within said walls.

16. Method of making a channeled ceramic support element suitable for bonding to and supporting ceramic sheet material which comprises the steps of:

(a) providing a mandrel having a cross-sectional shape corresponding to a channel shape selected for the support element;

(b) forming a support element preform on the mandrel consisting essentially of one or more layers of inorganic reinforcing fibers coated with particles of a ceramic material selected from the group of: glasses, thermally crystallizable glasses, and metal oxide crystals; and

(c) consolidating the support member preform into an integral composite ceramic support element by heating the preform to a temperature at least sufficient to consolidate the particles of glass, thermally crystallizable glass, or metal oxide crystals into an integral glass, glass-ceramic or ceramic matrix surrounding the inorganic reinforcing fibers.

17. Method in accordance with claim 16 wherein the mandrel has a triangular cross-sectional shape.

18. Method in accordance with claim 16 wherein the support element preform is formed by wrapping inorganic reinforcing fiber plies precoated with the particles of ceramic material around the mandrel.

19. Method in accordance with claim 18 wherein the inorganic reinforcing fiber plies include at least one woven fiber ply preimpregnated with particles of the ceramic material.

20. Method in accordance with claim 17 wherein the plies are disposed in cross-ply fashion within the preform.

**FIG.1**

**FIG.2**

(a)

(b)    (c)    (d)

**FIG.3**

14·06·88

0294176

FIG.4